# EUROPEAN PATENT APPLICATION

(11) **EP 4 437 837 A1**
(43) Date of publication of application: **02.10.2024**
(21) Application number: 23166136.4
(22) Date of filing: 31.03.2023
(51) Int. Cl.: A01G 31/06, A01G 31/04, A01G 9/24

(54) **MODULAR GROWTH AND CULTIVATION SYSTEM**

(71) Applicant: KWS SAAT SE & Co. KGaA, 37574 Einbeck (DE)
(72) Inventor: Gruber, Benjamin David, 37574 Einbeck (DE); Günter, Carlos, 37574 Einbeck (DE); Hansing, Frithjof Leonhard, 38173 Evessen (DE)
(74) Representative: Michalski Hüttermann & Partner Patentanwälte mbB

(57) **Abstract**

The invention refers to a growing or cultivation system (1) for growing or cultivating organic or plant-based material, the system comprising:
at least one modular basic skeleton (2) for receiving at least one modular racking element (3);
at least one modular racking element (3), which is configured to carry the organic or plant-based material, wherein the at least one modular racking element (3) is connectable to the at least one modular basic skeleton (2);
at least one modular runway provided at the at least one modular basic skeleton or provided at the at least one modular racking element; and
at least one, in particular powered, modular transport shuttle for moving the at least one modular racking element along the at least one runway in accordance with a growth status of the organic or plant-based material and/or the crop planted.

## Description

### Technical field

The disclosure refers to a growing or cultivation system for growing or cultivating organic or plant-based material.

### Background

Growing systems provide an environment for growing crops in water or for cultivating other organic material. For example, plants and vegetables may be placed in a growing medium such as clay pellets, rock wool, recycled foam, foam, peat, sawdust, gravel, or coconut fiber, and then, fed a feeder or nutrient to make them grow.

Systems according to prior art are based on shelf systems in which various organic materials are cultivated on the shelf levels. Such shelving systems are space-saving and mobile. The organic material can be moved to different locations as needed.

### Description of the disclosure

Based on this situation, it is a task of the present disclosure to provide an improved growth system. Particularly, the aim is to improve the adaptability of the system to the needs of the cultivated material, while at the same time subjecting the cultivated organic material to as little stress as possible.

The task is solved by the features of the independent claim. Advantageous embodiments are indicated in the dependent claims. If technically possible, the features of the dependent claims may be combined as desired with the features of the independent claim. According to the disclosure, it is provided a growing or cultivation system for growing or cultivating organic or plant-based material. The system comprises:
- at least one modular basic skeleton for receiving at least one modular racking element;

at least one modular racking element, which is configured to carry the organic or plant-based material, wherein the at least one modular racking element is connectable to the at least one modular basic skeleton;
at least one modular runway provided at the at least one modular basic skeleton or provided at the at least one modular racking element; and
at least one, in particular powered, modular transport shuttle for moving the at least one modular racking element along the at least one runway in accordance with a growth status of the organic or plant-based material and/or the crop planted.

Advantageous aspects of the disclosure are explained below and preferred modified embodiments of the disclosure are described further below. Explanations, in particular of advantages and definitions of features, are basically descriptive and preferred, but not limiting examples. Where an explanation is limiting, this is expressly mentioned.

The basic aspect is that a modular system with movable elements is provided which is adapted to the needs of the organic material planted at the system. The movable elements may be adapted to carry out one or more tasks in the cultivation system. Each of the movable element may be controlled or may autonomously carry out a task for which it is pre-configured.

For example, according to a cultivation or growth status, the mechanical shape of the system is modified. The shape may be modified by using the movable elements. For example, a distance between two modular racking elements is adjusted according to a growth height of plants cultivated on a surface of the modular racking element. Alternatively or additionally, the distance between one modular racking element and a light source and/or a sensor system may be adaptively varied according to the growth status and/or needs of the organic material.

In other words, the vertical distance or height between the modular racking elements, e. g. plant-carriers, may be flexibly selected. The distance may be selected to preestablished heights to adapt it to the different vertical space requirements of the plant, dependent on the growth stage of the plant and/or the crop planted. For example, it may also be used to set a distance to a light source or a supply quantity of ambient air.

Especially, the light source may be an artificial light source. It is conceivable that natural and/or artificial light may be used alone or in combination with each other. The artificial light source may be movable in accordance with a growth status and/or health status of the organic material.

The system is a shuttle based plant growth system, suitable for multiple plant species and processes. That means that different plant species may be planted at the system. The system is modified by at least one moveable shuttle which moves along the skeleton of the system. The system may be installed indoor. The extension of the system may, mainly be, in a vertical direction.

It may be provided that each of the modular racking elements is formed as one piece or is connected to a modular transport shuttle. In other words, the basis for realizing the modular system is the transport shuttle, which carries the modular racking elements and the same/or another transport shuttle optionally carries a lightning system, for example installed on a light carrier.

According to one example, assume that the system has two modular racking elements each attached to four vertically extending struts. The modular racking elements may be called growing trays or plant-carriers, in accordance with their application field.

The modular racking elements may be parallelepipedally flat, with two opposing surfaces of each of the modular racking elements being used for cultivation of organic material. Hence, suppose that a first organic material grows on a first surface of a first racking element and a second organic material, which particularly harmonizes with the first organic material, grows on a second surface of a second racking element facing the first surface. The first organic material grows against the direction of gravity and the second organic material grows upside down, i.e. in the direction of gravity. A common light source available to both organic materials may be provided between the two opposing surfaces on which the first and second organic materials grow.

In another example, the system is a transport shuttle system with multiple shuttles in combination with a one or more modular racking elements, each formed as a plant-carrier and one or more artificial light sources, each formed as a light carrier, and/or optionally one or more sensor-carriers. The transport shuttles are configured to be movable along a plurality of rails of the modular runway which are provided at the skeleton. Such a system provides flexibility to select a height through selecting which rail to occupy with the plant-carriers and which rail to occupy with light carriers, and optionally with sensor-carriers. At the same time, flexibility is provided with the lighting used, for example by selecting a light carrier with the desired light type and/or the sensor carrier by selecting a sensor-carrier with the desired sensor types.

In other words, the overall concept is to decouple all components of a growth system. Particularly, decoupling light from the growth structure in a mobile manner allows increased flexibility and adaptability of the growth system and the species and processes that it can accommodate. By combining this uncoupled modularity with shuttles, it is possible to create different levels of automation, as desired. Furthermore, in case the seedlings grow up to plants, they can be changed from a small to a big/tall compartment more easily.

The system provides independent modular racking elements and transport shuttles, installed on the skeleton and/or on the racking elements with a multitude of tracks/rails. This means that plants, light, sensors, and application technology can be flexibly used and moved throughout the growth system at any time and in various permutations, completely independent of one another. Thereby, only the technology required is in use at any given time. Furthermore, access to plants or other grown organic material is easily accomplished.

In particular, this allows a growth system to be provided more cost-effectively. The growth system is also less maintenance-intensive, as electronics/sensors/light carriers are only used where they are needed. When they are not needed, they may be used elsewhere and in particular do not have to remain in humid places that, potentially, may be exposed to a lot of UV radiation. This reduces wear and tear on sensors and other electronics. In addition, the modular racking elements can be designed in a very simple way.

The system is designed to be modular and thereby allows the maximum flexibility in its use and in scaling-up. The system is adaptable based on the different requirements for each plant, i.e. plant characteristics, plant height, environmental conditions, growth substrates etc.. Each element of the system, such as the modular racking element, the sensor carrier, or the light carrier, is adaptable/flexible. The system may grow a different plant under different conditions/requirements and for different uses, i.e. vernalization, seedlings, plantlings, crop production, seed production. The system is also scalable, adaptable to the use or growth processes. Further, a modular racking element configured as a plant-carrier supports the connectivity of the different modules, and preferably the several transport shuttles do too. Furthermore, intra module, inter module and throughout the connectivity, i.e. with post-harvest lab, is provided. The level of automation may vary respectively, from manual, semi-manual or semi-automated, to fully automated.

The system may accommodate different plant characteristics, such as height, planting density, plant shape. The system provides cultivation under different environmental conditions, such as light intensity or spectral composition, temperature, humidity, CO2 concentration, aeration, ventilation. Furthermore, the system may be used with different growth substrates, such as peat, organic substrates, mineral substrates, hydroponics, aeroponics. The system may provide an environment for different growth processes, such as speed breeding, single seed descent, crossing, vernalization, plantlet production, seed production, phenotyping, or the production of one or more of the following groups: plants, incl. leafy greens and crops and vegetables and fruits and trees from seed up to small trees, insects, yeasts, bacteria, algae, or fungus for the production of food, feed, ornamental, production, medicinal or research purposes.

Thus, the definition of plant or organic material includes all plants, incl. leafy greens and crops and vegetables and fruits and trees before going to fields, insects, yeasts, bacteria, algae, or fungus for the production of food, feed, ornamental, medicinal or research purposes.

The system could be installed in different types of facilities such as, but not limited to, greenhouses, phytotrons, climate chambers, containers, room-in-room system, warehouse like systems, vertical farming systems, or vernalization rooms.

The modular basic skeleton is primarily intended and configured to set a vertical distance between two modular racking elements, which may similarly be load-bearing elements. The modular basic skeleton thereby provides a body of a rack of the system. For this purpose, the skeleton has at least two load-bearing elements. For example, the skeleton may have at least two vertically installable struts. Alternatively, or additionally, the basic skeleton may comprise vertically installable plate-shaped elements. The load bearing elements, such as the struts or the plate shaped elements, may, for example, be installed using feet or be anchored directly to the ground. The load-bearing elements are designed to be connected to the modular racking element(s). The load-bearing elements of the modular basic skeleton may be configured to allow a stepless or stepped adjustment of a distance between two modular racking elements. Castors may be attached to the load-bearing elements. The load-bearing elements, which are preferably vertically installable, may be connected to horizontally installable elements, which are configured to connect the vertical elements.

Elements of the modular basic skeleton may also be referred to by "racking modules" and the modular basic skeleton may also be referred to by "racking" or by "body/corpus of the rack". The racking modules or elements form the corpus/body of the modular basic skeleton. It is preferred that the body of the modular basic skeleton is self-supporting and does not require the modular basic racking elements for this purpose. Generally, the racking module may be transparent to daylight or non-transparent or in another form adapted to the respective requirement.

The racking modules may be designed to adjust a dimensioning of the system, in particular of the body of a rack or a cabinet they form, in any direction according to needs of the organic material to be cultured. In particular, the dimensions and the design of the rack or the system are adapted to the respective growth status of the organic material. The adaptation may refer to a supply infrastructure or the dimensioning of the rack, for example.

Depending on the requirements, the racking modules may be of any design and ensure automatic or semi-automatic access to the individual modular racking elements. For example, one or more of the racking modules may be designed as a type of roller shutter and can be operated by an automated mechanism or manually.

The rack resembles pallet racking or shelves, being flexible for the number of levels in a vertical height in a direction of a Z-axis, when standing in the aisle looking at the rack, a number of rows in a direction of an X-axis, and a number of depth positions in a direction of a Y-axis, wherein the X and Y axis are horizontal axes. That is, it is able to place modular racking elements on tracks at any defined point of different levels, rows or depths.

The rack may be filled and emptied with elements, which may be the modular racking element, such as the plant-carrier, or the light carrier, the sensor shuttle, the application-shuttle placed or retrieved manually, semi-automatically or automatically. The rack may be "filled" or "emptied" from the one or more sides e.g. the front, and/or the back, and/or the side. In automated or semi-automated systems, it is preferred a use of a shuttle such as the transport(ation)-shuttle, or sensor shuttle, or application-shuttle.

The rack may comprise one or more of: a fresh water supply, which may be mounted i.e. in the walls of a module or in close proximity to tracks intended for the modular racking elements, such as the plant-carriers. The rack may also comprise one or more of: dirty water/drainage receiving ports or gutters, which may be placed preferably on the tracks intended for the modular racking elements, especially the plant-carriers, for example as a plug-in connection, or next to the modular racking elements as gutter or drip-rail.

Water treatment groups may be formed along the X, Y, or Z axes, and multiple axes may be combined to form a larger group. The rack may be built as units or modules. Several modules may be combined. The combination may combine automated, semi-automated and manual modules - preferably interconnected, so that the carriers and/or shuttles may be moved around.

The rack preferably comprises an electricity connection port or rails or busbars for the tracks intended for light carriers or sensor carriers. Electrical control groups may be formed in any of the three axes.

Depending on the installation, air ducts may be installed between the rows or columns or levels of the rack to ensure adequate air flow through the plant growth area. There may be air-inlet and air-outlet ducts. The air can be processed before entering the rack or after leaving the rack, thereby adapting humidity, CO2 level, temperature, filtration. For smaller installation, or where installed inside climate chambers, this may not be necessary in total or partially.

In automated or semi-automated systems the rack resembles drive-in or channel storage racking. Carriers and shuttles can pass longitudinally (Y-axis) along the racking system to many depths of carriers within the rack. This rack is extremely space efficient.

In manual or semi-automated systems, the rack may be installed so that only one or two or a few carriers may be accessed in the Y-axis on each side of a central pathway. This rack looses 20-33% of space used for the central pathway.

Tracks as elements of a modular runway may be installed at a multitude of heights of the Z-axis, for example at pre-defined heights/distances to allow one or more levels of modular racking elements and light carriers and/or sensor shuttle and/or application-shuttle placed over the modular racking elements, with the ability to increase the modular racking element to light distance based on a process, plant species, plant growth stadium/stage, height, or age. This is achieved by selecting the tracks to be used to place or retrieve the different elements such as carriers and shuttles. Such track system and selection is a main aspect of the disclosure.

When processes need a lot of human access, such as a process of crossing, or plant growth in glasshouse conditions, that means only one level of modular racking elements, then the modular racking element may be taken to single-level racking, or multi-levels matching human access levels, both with or without the light carrier as required.

The rack may optionally contain sensors or application possibilities integrated into the racking modules and placed i.e. in the walls or next to the tracks.

The modular racking element, for example formed as a plant-carrier, provides in its most basic form, a mobile and stackable, waterproof bench, in or on which organic material, such as plants, can grow. The modular racking elements may be interchangeably used for different processes and between different locations. The modular racking element is configured to be placed on racks/rails and moved by the transport shuttle.

The modular racking element and respective elements, such as struts, of the skeleton are configured to be releasably connectable to each other. For example, each of the elements may be formed as a U-Profile, L-profile, or T-profile. In this case, a part of the profile as a vertically continuous extension may cooperate with a connecting element of the modular racking element to create a detachable connection between the respective strut and the racking element.

The modular racking element is designed to support, contain, or provide a base for growth of organic material on at least one surface. Several surfaces can also serve as a basis for cultivation. It is preferred that the modular racking element comprises one or two surfaces for growing organic material. These surfaces may be located on opposite sides of the modular racking element facing away from each other.

The modular racking element may, for example, be designed as a rectangular, flat body. "Flat" means that an extension of the body of the modular racking element in the vertical direction when installed on the skeleton is significantly less than an extension of the body in other directions. For example, the body in the installed state may have a maximum vertical extension of 1/8, preferably 1/15 or even less than an extension in a direction having the largest extension.

The modular racking element may be cuboidal in shape. In this case, a circumferential groove in the edge area on one or more surfaces of the modular racking element is conceivable. Further grooves extending through an inner surface are conceivable. The grooves can be designed to enable irrigation/supply of nutrients. It is also conceivable that a modular transport shuttle uses the grooves as a trough. Alternatively or additionally, projections running along the edge of one or more surfaces of the modular racking element are conceivable. The projections may be designed to hold liquid on a surface - either because they form a barrier or, for example, due to the capillary effect. In the latter case, it is conceivable that nutrient solutions applied to the modular racking element to supply the organic material with liquid and/or nutrients have a correspondingly adapted viscosity. "Correspondingly adapted" may also mean that a distance between projections or a depth/width of grooves and a viscosity of a nutrient solution are adapted to each other in such a way that the nutrient solution remains between the projections and/or grooves due to the capillary effect, i.e. independently of the effect of gravity.

The projections/grooves may additionally be designed in such a way that solid particles of the nutrient solution distribute themselves as evenly as possible on a surface to which they are applied when the nutrient solution evaporates. Alternatively or additionally, the nutrient solution may be designed in such a way that it interacts with the organic material to be cultivated and chemically or physically binds it to itself, e. g. by absorption or adsorption.

Within the modular racking element, plant growth may be realized in various substrates, including but not limited to soil, peat, coco, rockwool, organic substrates, inorganic substrates, mineral substrates, NFT hydroponics (nutrient film technique), DFT hydroponics (deep-flow technique), floating rafts, clay pebbles. Plant growth may take place inside the plant carrier, in tubes, pipes, grids or in e.g. pots placed on/into the plant carrier.

Especially in case that the modular racking element is configured as a plant-carrier but also in other application cases, the racking element may include an outlet of water in the form of dripping, pouring, injecting, or squirting, likely oriented on one or opposing sides of the carrier. The outlet may be positioned to either allow all water to drain out, and/or to allow a reservoir of water to be formed. The outlet may be positioned at the bottom or at the side of the modular racking element. The modular racking element may be adjusted to optimize the water outlet. The outlet may be all time open or regulated like with a mechanically controlled valve or electromagnetic valve. The outlet may be i.e. a plug-in system into/onto the shuttle trail or into the wall of the growing unit, or a dripping/pouring system into a water gutter or water ring or drainage positioned below the plant-carrier.

Especially in case that the modular racking element is configured as a plant-carrier but also in other application cases, furthermore, the modular racking element may also comprise a water inlet connection. The water inlet may be configured to provide water in the form of dripping, pouring, injecting, or squirting, likely oriented on one or opposing sides of the modular racking element with respect to the outlet water. Incoming water may also include nutrients, minerals, hormones, or other chemicals or biological substances like i.e. microbes or RNA. The water inlet can be included in the racking element or above i.e. placed in the walls of the growing unit or a pipe or tubing.

In accordance with the water inlet connection of the modular racking element, one or more of the elements/racking modules of the modular skeleton comprise a water outlet for dripping, pouring, injecting, or squirting, etc.

Especially in case that the modular racking element is configured as a plant-carrier but also in other application cases, the racking element is configured to be connected to a supporting structure. The supporting structure may be mounted on at least one of the surfaces of the racking element. The supporting structure may be configured as a grid/mesh or netting on it to prevent sessile organisms, such as plants, falling over.

Especially in case that the modular racking element is configured as a plant-carrier but also in other application cases, the modular racking element may have the option to place an insect netting enclosure on it. To either enclose mobile organisms, such as insects, growing on the plant-carrier, but allowing air and light transmission, or to prevent insects entering the racking element.

The modular racking elements are configured to be used within all scales of automation, thereby allowing flexibility to move between processes and growth locations.

Especially in case that the modular racking element is configured as a plant-carrier but also in other application cases, the modular racking element may be any size desired. The preferred size is 120 × 80 × 15 cm. Overall, the dimension of the modular racking element may be from 20 to 1200 cm × from 20 to700 cm × from 1 to 500 cm height in to allow access to all plants on the carrier when required. Selecting the same dimensions as a EURO pallet would allow existing logistics infrastructure to be used when handling and transporting carriers. The standard EURO pallet according to EN 13698-1:2003 is a returnable transport pallet with a base area of 0,96 square metres (0,4 loading metres) and the dimensions 1200 mm × 800 mm × 144 mm (length × width × height).

Especially in case that the modular racking element is configured as a plant-carrier but also in other application cases, an underside of the modular racking element may be designed to be lifted by a shuttle, or by conventional pallet handling equipment such as forklifts. "underside" may refer to a side/ a surface of a cuboidal/frame-formed modular racking element, which is not used for cultivation of organic material.

The modular racking element may comprise sensors, such as sensors for water content, nutrient concentration, humidity, weight etc.

The modular racking element may be configured to communicate with a Central Growth Control System (CGCS). The CGCS and the racking element may be configured to exchange information in the form of "communicate and discuss", and/or the CGCS may be configured to control the parameters of the modular racking element, such as the water-outlet.

The modular runway is designed to ensure the movement of the modular transport shuttle. The modular basic skeleton has at least one modular runway. The modular runway may be configured to be attachable to the basic skeleton, for example. The runway may also be made in one piece with the basic skeleton. Alternatively or additionally, a modular runway may be provided on the modular racking element. The modular runway may be integral with the modular racking element, for example formed by the extension(s) or detachably connectable to the modular racking element.

The modular runway may provide fixed installation heights for the modular racking elements, for example. The fixed installation heights for the modular racking elements may be formed by, preferably horizontally installable, L-profiles or other equivalent elements, which are respectively connected at the fixed heights to vertically extending racking modules of the modular basic skeleton. Thus, the L-profiles are elements of the modular runway and may exclusively provide the runway in one rack in each fixed installation height providing a floor of the rack. The fixed installation heights may have been determined during an assembly of the rack by attaching the L-profiles by the transport shuttles at pre-planned heights according to a need. Here, one or more transport shuttles may be designed to attach the elements of the modular runway to the vertically extending racking modules according to a construction plan for a rack.

Elements of the modular runway may define different heights for individual elements, thereby providing different runway routes. These individual elements may be any of: the modular racking element, the transport shuttle, the light carrier, the sensor shuttle, a light shuttle, or an application shuttle. For example, in case that two runway routes are necessary, the elements of the modular runway may be configured as an L-profile. The two L-legs of the L-profile, which are perpendicular to each other in the cross-section of the L-profile, provide two different heights, thereby providing two runway routes. For example, the modular racking element may be configured to rest or be moved on a vertically extending leg, and thereby parallelly extending to the vertical racking modules, of the L-profile. On the second, horizontally extending leg of the L-profile there may be provided space for a movement of shuttles, such as the modular transport shuttle or a sensor shuttle.

In general, the modular racking elements, the shuttles and other carriers and the elements of the modular runway, such as the previously described L-profile, may be adapted to each other in such a way that modular racking elements, shuttles and other carriers are moveable at different heights of the modular runway. More general, the at least one modular racking element, shuttles, in particular the at least one transport shuttle, carriers and elements of the modular runway are adapted to each other such that the at least one modular racking element, the shuttles, in particular the at least one transport shuttle, and the carriers are moveable at different heights of the modular runway.

The construction of the racking modules to be installed vertically, i.e. for example a number of air and other outlets of channels for supplying the organic material on the modular racking elements may be chosen according to the construction plan, too.

For transporting the carrier, any of the shuttles, that means the transport shuttle, the light carrier shuttle, the sensor shuttle, or the application shuttle, may have distance means which is configured to set a distance between the shuttle and the element being transported by the shuttle, such as a carrier. The distance means is configured to set a distance, for example, corresponding to a height difference between routes of the modular runway, on which the shuttle and on which the transported element is moved. The distance means may be telescopic to lift the carrier. It is also conceivable that the distance means has tools or gripping means at the end to attach the elements of the modular runway to the racking modules at a certain height or to detach them.

It is also conceivable that the distance means has tools or gripping means at the end to attach any of the modular racking elements, elements of the skeleton elements of the modular runway or other elements to each other at a certain height or to detach them according to a pre-defined construction plan.

The modular transport shuttle may be powered. This means that the modular transport shuttle itself may have a small micromotor to move modular racking elements, modular runways, or struts of the modular basic skeleton. The micromotor may be powered via a busbar installed on elements of the skeleton and/or on the modular racking element or by a battery, for example, or by a combination thereof.

The transport shuttle is used for transporting the modular racking element or other carriers along the Z-axis of racking (vertical), also along the X and Y-axes (horizontal), and for manual/semi-/fully- automated solutions, or between different growth modules or connected indoor systems, such as seeding modules, or harvesting modules, or laboratories, or phenotyping units, etc..

The transport shuttle may be adapted to push-up from below for modular racking elements, such as plant carriers, and/or pull-up from above for light- or sensor-carriers. It is preferred that the transport shuttle is adapted to push-up from below modular racking elements or other carriers in case of including sensor and application shuttles. A reason is that those shuttles anyway may need their own track of the modular runway under a light level of the modular runway, for which reason one may use a standard off-the shelf shuttle for also lifting the light carrier or sensor shuttle or application-shuttle from underneath.

In case that the modular racking element is a plant carrier, the transport shuttle may be adapted to transport the racking element with a push-up from below. The push-up may be based on a mechanical, electromechanical, electromagnetic, pneumatic or another mechanism.

The transport shuttle may be adapted to transports the light carrier in several ways:
a) the light carrier is transported below the Transport shuttle by a pull-up system, which is based on a mechanical, electromechanical, electromagnetic, pneumatic or another mechanism,
b) the transport shuttle transports the light carrier with a push-up from below. The push-up may be based on a mechanical, electromechanical, electromagnetic, pneumatic or another mechanism,
c) by pushing or pulling the light carrier.

The transport shuttle may be configured to transport the sensor shuttle and/or the application-shuttle in several ways:
a) the sensor shuttle or application shuttle are transported below the transport shuttle by a pull-up system, which may be mechanical, electromechanical, electromagnetic, pneumatic or be based on another mechanism,
b) the transport shuttle transports the sensor shuttle or the application shuttle with a push-up from below. The push- up may be based on a mechanical, electromechanical, electromagnetic, pneumatic or another mechanism,
c) by pushing or pulling the sensor shuttle or the application shuttle or the light carrier, thereby moving any of the sensor shuttle and/or the application shuttle.

The transport shuttle may include one or several sensors and/or cameras and/or devices, to acquire data and measure parameters. Thus, the transport shuttle may be configured as a transport-sensor shuttle or a transport-application-shuttle. The sensors may include e. g. sensors for humidity, CO2 concentration, air flow, temperature, light spectra, light intensity, etc.. The Transport shuttle may have gravimetric sensors.

The one or more applied transport shuttle(s) is/are adapted to run on tracks located below the modular racking elements, especially in case that the latter are configured as plant-carriers, and either below or above light carriers or sensor shuttle.

The one or more transport shuttle(s) has/have an engine and an energy source. It/they may have an electric motor, and may be powered by battery or capacitors, electromagnetically or magnetically powered, or steered, controlled internally or remotely by a control software, or human interface.

The transport shuttle may be combined or stacked together either with the application-shuttle, or with the sensor shuttle, or with both, the application-shuttle, and the sensor shuttle; thus, moving as a combined shuttle unit.

The shuttles and the modular racking element and/or the light carriers and/or the application carriers may be stacked, combined, or attached, for example in a similar way to a train, by the same or other shuttles and/or carriers.

Further, the one or more transport shuttles may be configured in a different manner. The overall amount of transport shuttles, and preferably other types of shuttles, such as application shuttles or sensor shuttles, which is comprised by one system is referred to as a shuttle system. In one shuttle system, different transport shuttles may be used or only one type of transport shuttles may be used. As an example, but not limited to them, some shuttle systems with different transport shuttles encompass or one or more respective transport shuttles of one shuttle system is/are adapted as described below:
(i) one transport shuttle is configured to transport several carriers. The modular racking element formed as the plant-carrier is, for example located on a first side of, e. g. above or on a top of, the transport shuttle, and the light carrier or sensor carrier may be located on a second side of, e. g. below or on the bottom of, the transport shuttle. The modular racking element, the light carrier or the sensor carrier may be transported by the one transport shuttle at the same time or at different times. In other words, the transport shuttle may be adapted to carry all the racking element, the light carrier, and the sensor carrier altogether at the same time. Alternatively, the transport shuttle may be configured to carry one of the racking element, the light carrier and the sensor carrier or the transport shuttle may be configured to carry the racking element on top and one of the light carrier and the sensor carrier on its bottom. The transport shuttle is configured to deposit the carriers and/or the modular racking element where each of them is planned to be located.
   "Top" or "above" and "bottom" or "below" or "underside" or equivalent terms may refer to an orientation with respect to the direction of growth of the organic material to be moved with the transport shuttle. Then, in relation to a rack with a surface that is used for organic material to be cultivated, the direction of the growth direction corresponds to "top" or "above" and the direction against the growth direction corresponds to "bottom" or "below" or "underside".
(ii) The shuttle system may comprise one shuttle to transport only the modular racking element formed as a plant-carrier. The transport shuttle is configured to carry the racking element above by lifting the racking element in a similar way to a transport of pallets in the warehouse system.
(iii) The shuttle system may comprise one shuttle to transport only the modular racking element formed as a plant-carrier by pulling or pushing the modular racking element. The modular racking element may be carried above.
(iv) The shuttle system may comprise one transport shuttle to transport only the light carrier. The transport shuttle may be configured to transport the light carrier on a first side, for example above, or below, or by pushing or pulling the light carrier.
(v) The shuttle system may comprise a transport shuttle, which is configured to be a light carrier by itself, which means that the lights are installed on one surface, such as on a surface on the underside.
(vi) The shuttle system may comprise a transport shuttle to transport one or different sensor carriers, which may be realized either above, below or by pushing or pulling the sensor carrier(s).
(vii) The shuttle system may comprise one shuttle, which is configured to be a sensor carrier by itself, meaning that the sensors are installed in or on the surface, such as on a surface on the underside.
(viii) The shuttle system may comprise at least two transport shuttles which are connectable to each other. The connectivity of the transport shuttles may be used either to combine motor power of both transport shuttles to transport more heavier racking elements, for example after plants have grown and gained biomass. The connectable transport shuttles each may comprise one or more connecting elements adapted to be connectable to a modular racking element, to a light carrier or to a sensor carrier or a combination of them. Alternatively or additionally, one or more of the connectable transport shuttles may be configured as one piece with one or more of the modular racking element, the light carrier, or the sensor carrier.
(ix) The shuttle system may comprise transport shuttles with water connections or with electrical connections. For example, one or more transport shuttles may be configured to move a pipeline for supplying water/nutrient solution to one or more of the surfaces of the racking elements. The pipeline may comprise a connector for being connected to any of a racking element water supply connection/nutrient supply connection. Alternatively or additionally, the pipeline may comprise spraying openings for applying the water /nutrient solution to any of the surfaces of the racking element, on which the organic material is grown.

The transport shuttle may have different functionalities. For example, the transport shuttle may be provided with one or more sensors, light sources and/or appliances for applying chemicals or biological material/individuals to the grown organic material.

Furthermore, it is conceivable that further shuttles may be provided which are configured to provide a special functionality and not a transport functionality as the transport shuttle. Such shuttles may be a sensor shuttle or an application shuttle, for example. Furthermore, a light shuttle providing artificial light may be provided. It is also conceivable that a plurality of functionalities are combined with each other, such as a shuttle for transporting and providing artificial light, a shuttle with sensors and artificial light or a shuttle with light and appliances.

A sensor shuttle may have the following functionalities. The functionalities of the sensor shuttle may apply to other types of shuttles, in case that the latter shuttles have sensors.

The sensor shuttle may have installed, attached, incorporated, or carry one or several sensors and/or cameras and/or devices or sensor packages along tracks in the racking, preferably located above the modular racking element, especially when configured as a plant carrier, and below the light carrier, or in the case of gravimetric sensors, under the modular racking element, when configured as a plant-carrier.

The sensors/sensing systems of the sensor shuttle may be directed in a downward manner, but some sensing systems may also need upward facing sensors, such as spectral sensing or a gravimetric sensor. Various types of optical sensors may be included, including RGB, multispectral, hyperspectral, infrared, LIDAR, ultrasonic, microwave, etc.. Non-optical sensors may be included such as air sampling, climate sensors, temperature, humidity, CO2, 02, pathogen identification & sampling, disease identification & sampling, pest identification and sampling, etc.. Gravimetric sensors may be fitted on the sensor shuttle, or such sensors may be integrated into standard transport shuttles, so as to weigh the racking elements, such as plant carriers, by lifting from underneath.

The sensor shuttle is configured to run on the same tracks/rails/routes of the modular runway as the transport shuttle or on independent tracks/rails/routes of the modular runway located in the racking modules, i.e. underneath a track for the light carrier.

The sensor shuttle may be configured to be moved, that means be moved by pushing, pulling, pushing-up, pulling-up, by the transport shuttle or by the application-shuttle. Alternatively, the sensor shuttle is configured to move by itself. The sensor shuttles may have an engine and an energy source, they may have an electric motor, and may be powered by battery or capacitor, electromagnetically or magnetically powered, or steered, controlled internally or remotely by a control software, or human interface.

The sensor shuttle may be combined or stacked together either with the transport shuttle, or with the application-shuttle, or with both, the transport shuttle, and the application-shuttle; thus, moving as a combined shuttle unit. The shuttles and carriers may be stacked, combined, or attached, in a way similar to a train, by the same or other shuttles and/or carriers

An application shuttle may have the following functionalities. The functionalities of the application shuttle may apply to other types of shuttles, in case that the latter shuttles have appliances with the functionalities of the appliances of the application shuttle.

An application shuttle may be used for applying chemicals and/or biological material onto organic material, including plants which are contained in the modular racking elements, or onto/into the plant growth system, for example to eliminate a pest. Chemicals to be applied include without limitation one or a combination thereof of herbicides, pesticides, fungicides, hormones, elements, nutrients, organic compounds, natural products or extracts, proteins, RNA, DNA, minerals, etc.. Biologicals to be applied include without limitation one or a combination thereof of virus, bacteria, algae, unicellular organisms, fungi, yeasts, etc.. Chemicals and biologicals may be formulated for a proper delivery. They could be delivered without limitation in liquid form, as aerosol, as powder, by dripping, by spraying, by sprinkling, by tilting over, etc.. Other objects to be applied may include insects, microbes, feed sources, insects, pollen, etc..

The application-shuttles run on the same tracks as the transport shuttle or the light shuttle or the sensor shuttle or on independent tracks/rails/routes of the modular runway, preferably located in the racking modules, i.e. underneath the track/rail/route for the light carrier, and above the plants.

The application shuttle may be moved, such as by pushing, pulling, pushing-up, pulling-up, by the transport shuttle or the sensor shuttle. Alternatively, the application shuttles may have an engine and an energy source, they may have an electric motor, and may be powered by battery or capacitor, electromagnetically or magnetically powered, or steered, controlled internally or remotely by a control software, or human interface.

The application shuttle may be configured to be combined or stacked together either with the transport shuttle, or with the sensor shuttle, or with both, the transport shuttle, and the sensor shuttle; thus, moving as a combines shuttle unit. The shuttles and carriers may be stacked, combined, or attached to each other in a similar way as a train by the same or other shuttles and/or carriers.

To, more generally, sum up many of the previously described features of any of the shuttle(s), it is provided, according to a modified embodiment, that the shuttle has a first surface which is configured to carry at least one element of the system, wherein the element is: a plant carrier, a light carrier, another shuttle, an element of the modular basic skeleton, an element of the modular runway and/or a modular racking element and wherein, in particular, the shuttle has a second surface which is configured to carry at least one other element of the system, wherein the element is: a plant carrier, a light carrier, another shuttle, an element of the modular basic skeleton, an element of the modular runway and/or a modular racking element.

The previously described modified embodiment of the shuttles improves that large transport capacities can be achieved. Scaling up the entire growth system with fewer shuttles is possible due to the flexible adaptability of the shuttles.

To, more generally, sum up many of the previously described features of any of the shuttle(s) or the carrier(s) or element(s) of the modular basic skeleton or the modular racking element(s), it is provided, according to a modified embodiment, that the system comprises at least one further modular shuttle to the modular transport shuttle, in particular at least one movable artificial light source, wherein the further modular shuttle to the modular transport shuttle is
- independently movable and/or configurable from the at least one the modular basic skeleton and/or the at least one modular racking element,
- configured to arrange and/or to install at least one element from the at least one the modular basic skeleton, and/or the at least one modular racking element, and/or at least one other shuttle or at least one carrier,
in particular in accordance with a growth status of the organic or plant-based material and/or the crop planted.

As described above, the features of the previously described modified embodiment of the system greatly improve a flexibility in adapting the system to actually demanded growth conditions.

More specifically adapted embodiments of the system refer to a movability of the artificial light source or the modular racking element in accordance with the growth status of the organic or plant-based material and/or the crop planted:
According to a modified embodiment, the growing or cultivation system comprises at least one movable artificial light source, wherein the at least one movable light source is independently movable from the at least one the modular basic skeleton and/or the at least one modular racking element, in particular in accordance with a growth status of the organic or plant-based material and/or the crop planted. In other words, according to the modified embodiment an artificial light source, which may be a light carrier, is independent of all other carriers and shuttles of the growth system. Especially compared to fixed mounted systems, particularly fixed installed lights, the modified embodiment allows flexibility to routinely adjust the height of the cultivation space, appropriate to the space requirements of the crop.

Combining the modified embodiment of a movable artificial light source with the system according to the disclosure, especially with the modular movable transport shuttles allows available space to be used very efficiently, and it enables automation of the growing process, which may be manual, semi-automatic, or fully automatic as required.

The movable artificial light source, when provided as a light carrier, is a mobile and stackable platform on the underside of which an illumination source (luminaire) may be installed or incorporated or attached or hanging, preferably a LED or OLED light source. The light carrier is placed on racks or rails/tracks of the modular runway and it is moved by the transport shuttle. Light carriers may be interchanged between locations and growth processes as required. The light carriers are easier to change than growing plants.

The light carrier may be fitted with an electrical connection in the form of electrical contacts, or plug which can automatically receive an electrical supply from the racking on which the light carrier is placed. The electrical connection may be automatically made and cut when the Light carrier is placed or lifted from the rack/rail.

The light carrier may alternatively have a source of energy incorporated or attached to it, like batteries or the like. Different models of the light carrier may be equipped with different intensities or spectra of light, and/or sources of light, and/or light controlling systems, to be selected as required for the plant growth stage or process.

Optionally, it is provided a light controlling system being, for example, configured for dimming and/or selecting light spectra and/or light intensities, which may or may not be included in the functionality of the light carrier may be programmed in advance, or by accessing information captured by a sensor, for example, and control the light correspondingly, and/or communicate with a Central Growth Control System or an external media, and/or be directly steered by the Central Growth Control System or an external media.

One or more of the light carriers may be designed to be
- lifted from above using the transport shuttle, for example hanging below the shuttle in such a case, or
- lifted from underneath using a shuttle, which may be a transport shuttle, or another shuttle, such as a sensor shuttle, etc. or conventional pallet handling equipment such as forklifts,
- pulled or pushed by using a shuttle, which may be a transport shuttle, or another shuttle, such as a sensor shuttle,
- by itself, such as being a transport shuttle which includes, incorporates, or has attached the sensors.

The light carrier may include one or several sensors and/or cameras and/or devices to acquire data and measure parameters. In other words, it is especially conceivable to include both a light source and one or more sensors in the same carrier, besides i.e. gravimetric sensors. This has the advantage of easier logistic, easier build, no blocking of light due to sensor-carrier in case the sensor carrier stay on the racks/trails of the modular runway for longer time. Exemplary sensors are sensors for humidity, CO2 concentration, ventilation flow, light intensity, or RGB, hyperspectral, fluorescence, infrared sensors/imagers, etc.. known by the person skilled in the art. The sensors and devices may be adapted to communicate among themselves and/or directly with an external media, an "on board" sensor controlling unit, or with a Central Growth Control System. The sensors, devices and the sensor controlling unit may be programmed in advance. The sensors and devices could be controlled by an external media or a Central Growth Control System.

The light carrier may be configured to move along the racks/rails of the modular runway by itself, that means autonomously powered, with an incorporated engine, i.e. an electro-motor, and an energy supply, such as an internal like battery, or external through mobile connection, induction or the like, or through magnetic impulses.

The shuttles and carriers may be stacked, combined, or attached, for example in a way similar to a train, by the same or other shuttles and/or carriers.

Shuttles of any or all of the following types are used in fully automated, or semi-automated installations. Shuttles may also be used in manual installations, helping staff to transport and/or place the plant carriers or the light carriers, and also for enabling the connectivity with other non-manual modules or indoor systems.

According to a modified embodiment, the at least one modular basic skeleton is configured to receive the at least one modular racking element and/or the at least one movable artificial light source independently from each other, and wherein the at least one, in particular powered, modular transport shuttle is configured to move the at least one modular racking element independent from a light source, in particular independent from the at least one movable artificial light source, along the at least one runway.

This improves the possibilities for a very flexible distance to be set between the organic material and a light source without subjecting the organic material to unnecessary stress.

According to a modified embodiment, the at least one, in particular powered, transport shuttle is configured to move the at least one modular racking element and/or a light source, in particular the at least one movable artificial light source, independently from each other along the at least one runway in accordance with a growth status of the organic or plant-based material and/or the crop planted.

This further improves the possibilities for a very flexible distance to be set between the organic material and a light source without subjecting the organic material to unnecessary stress.

According to a modified embodiment, the at least one powered modular transport shuttle is configured to assemble or disassemble at least one of or multiple of:
- the at least one modular basic skeleton; and/or
- the at least one modular racking element; and/or
- the at least one modular runway; and/or
- the at least one powered modular transport shuttle; and/or
- the at least one movable artificial light source; and/or
- at least one of to the at least one modular racking element: a sensor, a water supply, a water outlet, to drain excess water, the movable artificial light source.

According to a modified embodiment, the at least one modular basic skeleton comprises a supporting body with at least one connecting element, to position-adjustably connect at least one of: a supporting body/load-bearing body/elements of a load-bearing body of another modular basic skeleton, and/or a modular racking element, and/or a modular runway and/or a movable artificial light source.

The connecting element may, for example, be a groove or extension extending along the longitudinal axis of each racking module. A connecting element of the modular racking element or a connecting element of the modular runway may be connected to the groove or extension. With such a groove or extension, a vertically stepless connection is conceivable. It is important for the realization of an automatic assembly of a rack by a transport shuttle that the connecting elements can be actuated by grippers/tools of the transport shuttle. If the modular racking elements have to bear greater loads, for example due to their use, the racking modules may have a large number of latching elements/equivalent form of stepped connection options for the connecting elements of the modular runway/racking module. For example, a plurality of notches may be formed on a projection extending in the longitudinal direction of the racking module, which may then be used to fix the modular racking element/modular runway connecting elements at a certain vertical height of the rack. Thus, the rack can be flexibly adapted to the requirements of the organisms to be cultivated.

According to a modified embodiment, the system comprises controlling means for controlling the at least one powered transport shuttle and/or the at least one movable artificial light source according to at least of:
- a predicted growth rate of the organic or the plant-based material and/or
- growth data provided based on at least one sensor for detecting a growth status of the organic or plant-based material and/or
- environmental data, including, for example, operating time of the artificial light source and/or daylight and/or ambient temperature and/or properties of the growth medium of the organic or plant-based material.

Situation-specific control is thus possible. The control may be centrally realized, for example by a CGC System or de-centrally realized, for example, there may be transport shuttles/other shuttles that react according to a certain signal of another shuttle and maintain/supply the organic material. For example, a sensor shuttle assigned to a specific modular racking element for sensory monitoring may signal the system or the transport shuttle assigned to the specific modular racking element that irrigation is required. Either irrigation is then triggered at a corresponding water outlet of the corresponding rack or a transport shuttle with an irrigation element, e.g. small tank/water connection via pipeline and sprayer or other adequate device, is moved to the modular racking element and the organic material on the modular racking element is taken care of accordingly. Such a supply, not only with water, but also with nutrient solution/light/other substances/living organisms, e.g. insects, is conceivable as a precautionary measure according to a growth model or another scheme, too.

According to a modified embodiment, each of the at least one modular basic skeleton and the at least one modular racking element together provide the at least one runway for the, particularly powered, transport shuttle; and/or
wherein each of the at least one modular basic skeleton and the at least one movable artificial light source together provide the at least one runway for the, particularly powered, transport shuttle; and/or
the at least one modular basic skeleton alone provides the at least one runway for the transport shuttle; and/or
the modular basic skeleton is configured to receive a plurality of modular racking elements and/or a plurality of artificial light sources and/or a plurality of modular runways or other elements of the system.

Regarding the embodiments that each of the at least one modular basic skeleton and the at least one modular racking element together provide the at least one runway for the, particularly powered, transport shuttle or
each of the at least one modular basic skeleton and the at least one movable artificial light source together provide the at least one runway for the, particularly powered, transport shuttle, the elements of the modular runway can be attached to elements of the modular basic skeleton/modular racking element/movable artificial light source, for example if designed as a light carrier, or be designed integrally with these. If formed in one piece, then different groove profile depths can be present on elements of the modular basic skeleton/modular racking element/movable artificial light source. Elements of the modular basic skeleton/modular racking element/movable artificial light source may be formed with a support structure having functional areas assigned to functions of the modular basic skeleton/modular racking element/movable artificial light source and having functional areas assigned to functions of the modular runway. For example, the modular racking element can have one or more functional areas that are used for cultivating organic material. The functional areas to which the functions of the modular runway are assigned then run elevated to these functional areas or between the functional areas. The functional areas of the modular runway can also be arranged on one level. In a modular runway with routes/rails on several vertical elevation levels, a first elevation level can be on the same level as the elevation level on which the organic material is cultivated.

Advantageously, an available space can thus be used very efficiently. Compact arrangements can also be advantageous for organisms that require close positioning of a light source/light shuttle moved/carried on the modular runway or precise dosing of certain substances by an application shuttle moved/carried on the modular runway, for example.

The embodiment that the at least one modular basic skeleton alone provides the at least one runway for the transport shuttle includes that elements of the modular runway are directly attached to elements of the modular basic skeleton or are integrally formed on the elements of the modular basic skeleton. Combinations of one-piece construction and subsequent installation of elements of the modular runway are also conceivable and can favor flexibility in the design of the system. for example, shuttles can move on elements of the runway that are integrally connected to the modular basic skeleton in order to install other elements of the system, in particular the modular basic skeleton or the modular runway.

All elements to be installed may be connected to each other via snap-in connections, magnetic connections, friction-locked, form-fit, force-form-fit connections. In the case of automatic installation/connection of the elements of the system via shuttles, it is necessary that all connections are designed in such a way that they can be operated by grippers/tools of the shuttle. Conceivable are, for example, screw connections that may be actuated by a tool arm of the shuttle, clamp connections that can be actuated by a gripper arm of the shuttle, or self-engaging snap-in connections that are triggered by moving the element in a certain direction by a telescopic slide of the shuttle. All these types of connection are mentioned by way of example and should not be understood as the only possibilities for a connection between the individual elements of the system.

The modified embodiment that the modular basic skeleton is configured to receive a plurality of modular racking elements and/or a plurality of artificial light sources and/or a plurality of modular runways or other elements of the system favors, for example, an installability of individual elements of the system by the shuttles, for example in case of self-snapping snap-in connections.

Such an embodiment is advantageous, for example, if the modular basic skeleton forms the modular runway for the shuttles. In other words, it is conceivable that the modular basic skeleton provides a closed movement network/traffic route network per rack with all routes for the shuttles on which the shuttles move in order to move/install other elements of the system on the rack. It is also conceivable that the modular basic skeleton provides a closed movement network/traffic route network for the entire system with all routes for the shuttles on which the shuttles move in order to move/install other elements of the system on the rack. In other words, it is no longer necessary to install other elements of the modular runway in the respective rack or in the entire system.

According to a modified embodiment, each of the at least one modular basic skeleton and the at least one modular racking element are provided as one piece and/or are permanently connected to each other; and/or
wherein each of the at least one modular basic skeleton and the at least one movable artificial light source are provided as one piece and/or are permanently connected to each other; and/or
the modular basic skeleton is configured to receive a plurality of modular racking elements and/or a plurality of artificial light sources and/or a plurality of modular runways.

The embodiment that each of the at least one modular basic skeleton and the at least one modular racking element are provided as one piece and/or are permanently connected to each other is conceivable if one or more of the modular racking elements form supporting elements of the modular basic skeleton. The modular basic skeleton may then have further modular racking elements which are attached to racking modules of the modular basic skeleton in any height. This can advantageously provide lighter and/or more lightweight mobile racks of the system, since, for example, further load-bearing elements are not required. These fixed modular racking elements may also form a base for transport shuttles, from which they can install or arrange further elements of the system, for example of the modular basic skeleton. In the case of a permanent connection between modular racking element and racking module of the modular basic skeleton, it is advantageous if elements of the modular runway are also permanently installed, over which the transport shuttles/other shuttles can move. The racks with such fixed elements may also be used as part of a mobile modular runway between individual racks of the system. Advantageously, in this case the respective racks with the fixed elements have a drive and are designed to move automatically to a designated location.

Due to the fact that the movable artificial light source, for example when designed as a light carrier, provides a lot of space due to the small spatial extension of the light sources, further functional areas may be present on the movable artificial light source, for example sensors or elements of the modular runway. It is also conceivable that elements of the modular basic skeleton are permanently installed on a supporting part of the modular basic skeleton according to the requirements of the organic material to be cultivated, thus saving space.

According to a modified embodiment, the modular basic skeleton is configured to receive a plurality of modular racking elements and/or a plurality of artificial light sources and/or having a plurality of modular runways

According to a modified embodiment, the modular basic skeleton comprises at least one of:
- at least one electrical connection for being connected to the at least one movable artificial light source and wherein the movable artificial light source is configured to be electrically connected to the at least one electrical connection; and/or
- at least one connection for providing water and/or nutrient and/or fertilizer for being connected to the at least one modular racking element and wherein the at least one modular racking element is configured to be fluidically connected to the at least one connection.

Such a modified embodiment favors an efficient use of available rack space. Pre-installed connections on the system's rack are also useful when certain maintenance procedures for the organic material need to be carried out with great regularity throughout its service duration.

According to a modified embodiment, the at least one modular racking element has a first surface which is configured to carry the organic or plant-based material and a second surface, which faces away from the first surface,
and wherein the second surface is configured to allow the at least one modular racking element be carriable by a pallet handling system and/or
wherein the second surface comprises the at least one runway extending at least partially parallel to the first surface on a second surface.

With this, an available space can be efficiently utilized. It can also take advantage of the fact that certain organic materials reinforce each other's growth when they grow in close proximity.

According to a modified embodiment, at least one, in particular powered, shuttle comprises:
- a moving mechanism for moving the at least one modular racking element and/or the at least one movable artificial light source; and/or
- a loading area for receiving at least one shuttle, wherein the at least one shuttle is movable independent from the at least one shuttle, wherein the at least one shuttle is one of: a sensor shuttle comprising at least one sensor unit, an application shuttle for applying chemicals or biological onto the organic or plant-based material and/or other additives or eliminate unwanted conditions, such as pest, from the organic or plant-based material, an artificial light shuttle for applying artificial light to the organic or plant-based material, and/or the transport shuttle; and/or
- a connection mechanism for being connected to at least one of: another shuttle and/or the at least one shuttle being movable independent from the at least one transport shuttle; and/or
- at least one sensor for detecting a growth and/or health status of the organic or plant-based material; and/or
- at least one sensor for detecting signals indicating on environmental data; and/or
- a gravimetric sensor.

The sensor may comprise or consist of sensing units for sensing growth, health, flowering, seed production and ripening, pest detection, infection stage and presence or environmental factors, such as temperature, humidity, lightning, etc..

The previously described shuttle may be modular.

With reference to the transport shuttle, according to a modified embodiment, at least one, in particular powered, modular transport shuttle comprises:
- a moving mechanism for moving the at least one modular racking element and/or the at least one movable artificial light source; and/or
- a loading area for receiving at least one mobile transport shuttle, wherein the at least one mobile transport shuttle is movable independent from the at least one powered modular transport shuttle, wherein the at least one mobile transport shuttle is one of: a sensor shuttle comprising at least one sensor unit, an application shuttle for applying chemicals or biological onto the organic or plant-based material and/or other additives or eliminate unwanted conditions, such as pest, from the organic or plant-based material, an artificial light shuttle for applying artificial light to the organic or plant-based material; and/or
- a connection mechanism for being connected to at least one of: another powered modular transport shuttle and/or the at least one mobile transport shuttle being movable independent from the at least one powered modular transport shuttle; and/or
- at least one sensor for detecting a growth and/or health status of the organic or plant-based material; and/or
- at least one sensor for detecting signals indicating on environmental data; and/or
- a gravimetric sensor.

According to a modified embodiment, the modular basic skeleton and/or the at least one modular racking element are configured and arranged to provide a spacing between the at least one modular racking element and the modular basic skeleton, in particular between the at least one modular racking element and at least one wall of the modular basic skeleton, wherein the spacing is configured to allowing an at least temporary exchange of air.

The system may comprise a Central Growth Control System (Central GCS or CGCS). Such Central GCS may especially be provided in case of an Indoor Growth System (IGS). The Central GCS is optional. The Central GCS receives the data and information from sensors, and/or from human staff. It assesses the information, based on experience of staff and/or on artificial intelligence (AI), determines/sets optimal conditions for the Indoor Growth System for each crop at each stage of growth and for each process, preferably for each unit or module individually. The CGCS may determine on optimal pre-programmed conditions or on optimal learned conditions for the Indoor Growth System. The Central GCS may also determine on the position of each plant or modular racking element in the growth module and indoor growth system. It may also determine and accordingly control when to realize measurements with the Sensor shuttle, in order to control or improve the growth conditions. The Central GCS may also determine/set/control when to use one or more application-shuttles, to avoids, for example pests. The Central GCS may also include aspects of logistics and transport processes, assignment of transport and measurement/sensing tasks. It may be able to preempt coming demands for growth space, location, and environmental conditions, and prepare area within the growing system for such upcoming demands. It may optimize the utilization of all components of the system.

The following implementation schemes are conceivable. Other schemes are possible. The three elementary components, which are carriers, shuttles, and racking, may be built in a number of building blocks, depending on demand, and the level of automation required, creating a growth facility consisting of one or more of the following implementations:
a) Fully automated implementation scheme, in which:
   - shuttles are able to move along the Z-axis of the racking, with transport shuttles moving/transporting carriers to different positions along the Z-axis.
   - automation moves the shuttles and carriers to different X and Y-axes. Such automation may be realized by stacker cranes, automated guided vehicles, lifts.
   - shuttles and carriers are moved between different growth modules using conveyors, roller tables, automated guided vehicles, robots, etc.
   - the shuttles are controlled by a central management software, which creates assignments for shuttles to undertake. This is likely coupled to a warehouse management software for tracking the location of all carriers and shuttles.
   - The system can be versatile: for example, shuttle with automated connections between growth areas; shuttle with logistics solutions for automatically switching the shuttle between rows such as stackers; shuttles moving between areas with automated guided vehicles.
b) Semi-automated implementation scheme:
   - similar to fully automated solution, but shuttle is moved between racks (X or Y-axis) using pallet handling solutions such as forklift or pallet trolley or rolling conveyors needing human interaction. This would be a cheaper solution for installations not needing such high levels of movement and automation. The benefits of the modular system can still be maintained.
   - shuttles and carriers may be linked to manual or fully automated implementations within the same growth facility.
c) Manual implementation scheme:
   - Some parts of the growth facility may not require automated solutions. Here the carriers are placed on the shelving and moved manually, without the use of a shuttle. Pallet handling solutions may be used here, such as forklift or pallet trolleys, or rolling conveyors.

### Brief description of drawings

In the following, the invention is explained in more detail with reference to the accompanying drawings using preferred examples of embodiments. The term figure is abbreviated to Fig. in the drawings.

The drawings show
- Fig. 1: an exemplary scenario in which the growth system may be applied and an embodiment of a system;
- Fig. 2: an exemplary rack according to an embodiment;
- Fig. 3: an exemplary rack according to another embodiment;
- Fig. 4: an exemplary rack according to a further embodiment;
- Fig. 5: an exemplary rack according to far another embodiment;
- Fig. 6a: an exemplary rack and an exemplary arrangement of several racks according to an embodiment;
- Fig. 6b: different embodiments of shuttles; and
- Fig. 7: another embodiment of a system.

### Detailed description of embodiments

The described embodiments are merely examples, which may be modified and/or supplemented in a variety of ways within the scope of the claims. Each feature described for a particular embodiment example may be used independently or in combination with other features in any other embodiment example. Any feature described for an embodiment example of a particular claim category may also be used in a corresponding manner in an embodiment example of another claim category.

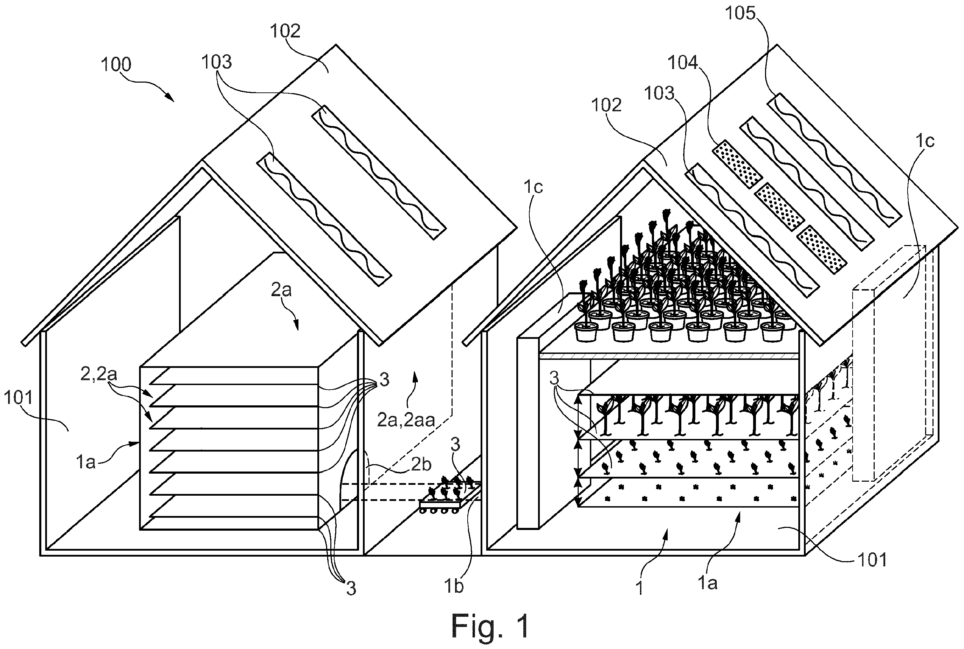

Figure 1 shows an exemplary scenario in which the growth system may be applied. Figure 1 shows a greenhouse 100. The greenhouse 100 is divided into two rooms 101. One of the rooms may be provided with a rack 1a adapted for microspore conversion (MS conversion), double-haploid donor plants (DH donor), or production of small plants (plantlets) if some requires them for follow-up uses like phytopathology tests, growth in the glasshouse, going to field, going to field so the plantlets do have a better chance to survive in the field since they avoided the attack of insects or pest during being seeds or fragile small seedlings, etc. The greenhouse 100 has one or more solar panels 103, one or more artificial light sources, e.g. LEDs 104, and/or one or more windows 105 on its roof 102. The greenhouse 100 may also have a sundish on an east side (not shown).

Different growth conditions may be provided in the two rooms 101. Equally, it is conceivable that different conditions for cultivating the organic material are provided within each of the systems 1. In the present embodiment, the system 1 is divided between the two rooms 101. The system has two racks 1a, each of which is formed from the modular basic skeleton 2 or also called "racking" 2. The modular basic skeleton 2 comprises racking modules 2a, which are elements of the modular basic skeleton 2. The elements of the modular basic skeleton 2 form the modular basic skeleton 2.

The modular basic skeleton 2 is configured to accommodate in each of the racks 1a a plurality of modular racking elements 3, each of which is not marked with a reference number "3" for the sake of clarity. One or more modular racking elements 3 may form a floor in the modular skeleton 2. The rack 1a in the room 101 shown on the left has five or, if a bottom closure should also be required, six plate-shaped elements, each of the plate-shaped elements being a racking module 2a of the modular basic skeleton 2. In other words, the rack 1a in the room shown on the left is closed and forms a room in the room 101 of the greenhouse 100. Five plate-shaped elements may also be sufficient to form a room in the room 101, e.g. when a lowermost modular racking element 3 forms a closure. Closure does not have to mean a hermetic closure. The closure must be sufficient to ensure growth/cultivation conditions for the organic material in rack 1a.

The racking modules 2a are only shown schematically. Depending on the requirements, they may be of any design and ensure automatic or semi-automatic access to the individual modular racking elements 3. For example, one or more of the racking modules 2a may be designed as a type of roller shutter and can be operated by an automated mechanism or manually.

Two racking modules 2a are designed as load-bearing elements of the skeleton 2. The racking module 2aa shown on the right in the space 101 shown on the left has a closable opening 2b.

One or more rolling benches 1b extend between the rack 1a shown on the left and the one on the right. In the present embodiment, one rolling bench 1b is used. The rolling bench 1b extends from the opening 2b of the rack 1a shown on the left to a lift system 1c of the rack 1a shown on the right.

Figure 1 shows a modular racking element 3, which is moved from the rack 1a shown on the right to the rack 1a shown on the left after the organic material on it, in this case small plants, has reached a certain cultivation state. For example, the rack 1a shown on the left side of Figure 1 may be adapted for a vernalization and/or germinating process for cultivation. It is also conceivable that the rolling bench 1b extends from the rack 1a shown on the left to a field, if it is envisaged that the cultured organic material has reached a desired growth state. Other combinations of such hybrid systems common in the technical field are also conceivable.

In the rack 1a shown on the right, modular racking elements 3 with organic material are housed in the different floors of the rack 1a. The more advanced the cultivation status of the organic material, in this case plants, the higher the organic material is moved in rack 1a. In the room 101 shown on the right side of Figure 1, there is provided one climate and not several climate sections.

In the right rack 1a, the distance between the lowest modular racking elements 3 and the second lowest modular racking elements 3 is half a metre. A distance between the second lowest modular racking elements 3 and the third lowest modular racking elements 3 is one metre. A distance between the third lowest modular racking elements 3 and the fourth lowest, i.e. topmost, modular racking elements 3 is two metres. These distances are given for illustrative purposes only. The dimensions are not intended to have a restrictive character for dimensioning the modular skeleton 2.

In the embodiment of figure 1, transport shuttles or other movable shuttles are not shown. It is conceivable that the modular racking elements are transported inside the rack 1a with the transport shuttles. It is also conceivable that instead of a rolling bench 1b or a conveyor belt or similar means, transport shuttles are used to transport modular racking elements 3 from a first rack 1a to a second rack 1a. Other shuttle types, such as sensor shuttles or application shuttles, are also conceivable to care for and supply the cultured material.

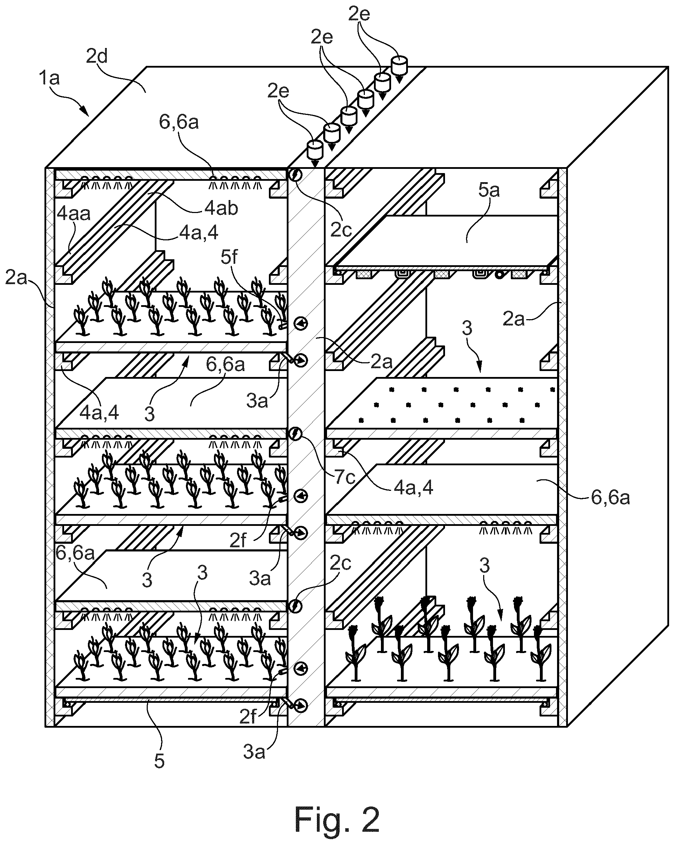

Figure 2 shows a rack 1a, according to a possible embodiment. The rack 1a of the present embodiment is designed as a kind of cultivation cabinet. At least three vertically extending, supporting racking modules 2a and a top plate 2d are provided. At least one of the racking modules 2a has channels for a gas supply and for a water supply to the individual modular racking elements 3, which can be inserted into the rack 1a at heights determined on the racking modules 2a. The channels are not shown. It is useful that outlets 2f of the channels are installed at the respective fixed heights of the racking elements 3. On the cover plate 2d, the channels open into connecting pieces 2e, which form inlets for the media fed into the channels. Furthermore, power connections 2c and busbars (not shown) may be provided on the racking modules 2a, for example for the electrical supply of one or more light carriers 6a. The modular racking elements 3 can have outlets 3a for draining excess liquid.

The fixed installation heights for the modular racking elements 3 are formed by L-profiles 4a, which are respectively connected at the fixed heights to the vertically extending plate-shaped racking modules 2a. The L-profiles 4a are elements of the modular runway 4. The fixed installation heights may have been determined during an assembly of the rack 1a by attaching the L-profiles 4a by the transport shuttles at pre-planned heights according to a need.

In the present embodiment, the elements of the modular runway define different heights for individual elements, thereby providing different runway routes 4aa, 4ab. The two L-legs of the L-profile 4a, which are perpendicular to each other in the cross-section of the L-profile 4a, provide two different heights. The modular racking element 3, which in this case is a plant carrier, rests on the vertically extending leg of the L-profile 4a. On the second, horizontally extending leg of the L-profile 4a there is space for a movement of shuttles, such as the modular transport shuttle 5 (see bottom level of rack 1a, bottom left), or a sensor shuttle 5a (see top level of rack 1a, top right).

Furthermore, in the present embodiment light carriers 6a are provided as a movable artificial light source 6. In this embodiment, the design of the modular racking elements 3, provided as plant carriers, the shuttles 5, 5a and other carriers, in this case the light carrier 6a, and the L-profile 4a are adapted to each other in such a way that modular racking elements 3, shuttles 5, 5a and other carriers 6a can be moved at different heights of the modular runway 4. In the present embodiment, a plant carrier, and a light carrier 6a are alternately inserted into the rack 1a on a left side of the rack 1a. The light carrier 6a may be supplied with power via a busbar on the vertical racking module 2a.

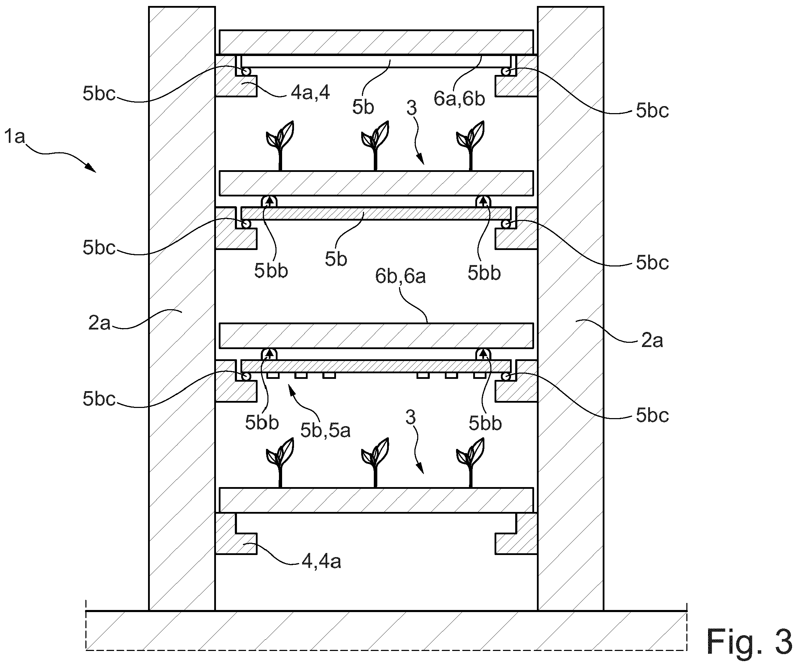

Fig. 3 shows an exemplary rack 1a according to another embodiment. The rack 1a has two vertical racking modules 2a, which are plate-shaped and form the load-bearing elements of the rack 1a. L-profiles 4a are attached to the racking modules 2a, which can have the same properties as the L-profiles 4a of the previously described embodiment. Exemplary shown in the rack 1a is a modular racking element 3, which is designed as a plant carrier. On a floor of the rack 1a above, a shuttle 5b is shown, which can be a transport shuttle 5. The shuttle 5b also has sensors that are attached to an underside of the shuttle 5b and have a detection area in the direction of the lowest modular racking element 3. The shuttle 5b transports a carrier, which is a light carrier 6a or a light sensor carrier 6b, over an upper side of the shuttle 5b. For the purpose of transporting the carrier, the shuttle can have distance means 5bb which set a distance between the shuttle 5b and the carrier, for example corresponding to a height difference between two routes of the modular runway 4. The distance means 5bb can be telescopic in order to lift the carrier. It is also conceivable that the distance means 5bb have tools or gripping means at the end to attach the elements of the modular runway to the racking modules at a certain height or to detach them.

Above the shuttle 5b with the light sensor carrier 6b/the light carrier 6a, there is a shuttle 5b and a plant carrier on the floor above the rack 1a. The shuttle 5b below the plant carrier can be designed in the same way as the shuttle 5b below it. All shuttles 5b have means of locomotion 5bc, for example wheels or caterpillars, on one side.

Above the shuttle 5b with the light sensor carrier 6b/the light carrier 6a, there is a shuttle 5b and a plant carrier on the floor above the rack 1a. The shuttle 5b below the plant carrier can be designed in the same way as the shuttle 5b below it. All shuttles 5b have means of locomotion 5bc, for example wheels or caterpillars, on one side.

A shuttle 5b and a light carrier 6a or light sensor carrier 6b are arranged above the shuttle 5b and a plant carrier on the top floor of the rack 1a. The uppermost shuttle below the light carrier 6a/the light sensor carrier 6b can have spacers (not shown).

The shuttles 5, 5a, 5b described about the other embodiments can be designed in the same way as the shuttle of the embodiment example described above.

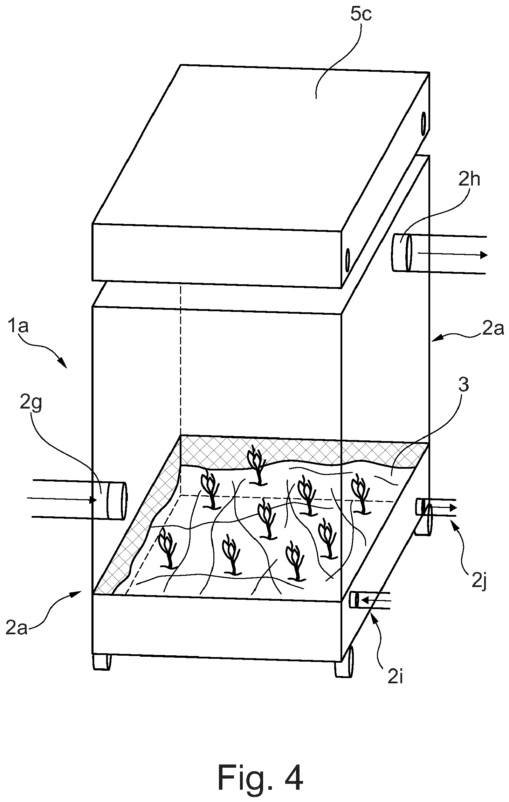

Fig. 4 shows an exemplary rack 1a according to a further embodiment. Schematically, only one modular racking element 3 is shown in this rack 1a. The vertical racking modules can have an air inlet 2g and an air outlet 2h. Inlet 2g and outlet 2h can be connected to an air supply/exhaust via a connecting piece that is not shown. An air supply via a simple ventilation system is also conceivable. The racking module 2a can also have a water inlet 2i and water outlet 2j. The modular racking element 3 can move on a rolling bench 2b or a similar means of transport through a lock (not indicated by a reference sign) of the rack 1a and out of the rack 1a through another lock (also not indicated by a reference sign). Alternatively or additionally, a light shuttle 5c can be provided vertically above, i.e. above the modular racking element 3, which is designed as a rolling LED unit.

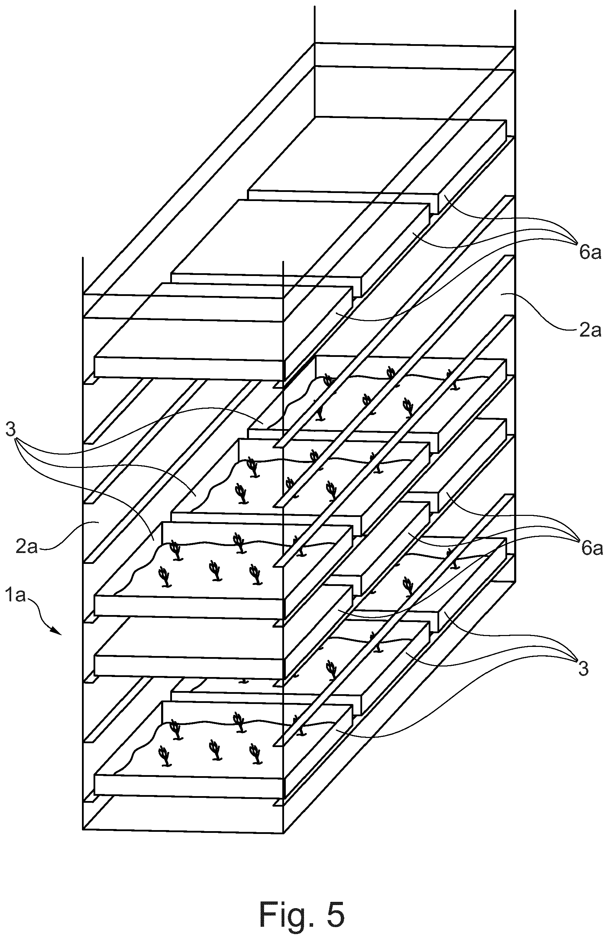

Fig. 5 shows an exemplary rack 1a according to far another embodiment. The rack 1a of this embodiment has a few carriers that are configured to be moved passively, but are not themselves mobile like a shuttle 5b. Each of the carriers must be moved into or out of the rack 1a by a transport shuttle 5 (not shown in this figure). The rack 1a has three modular racking elements 3 on each floor and three light carriers 6a on an upper/lower floor.

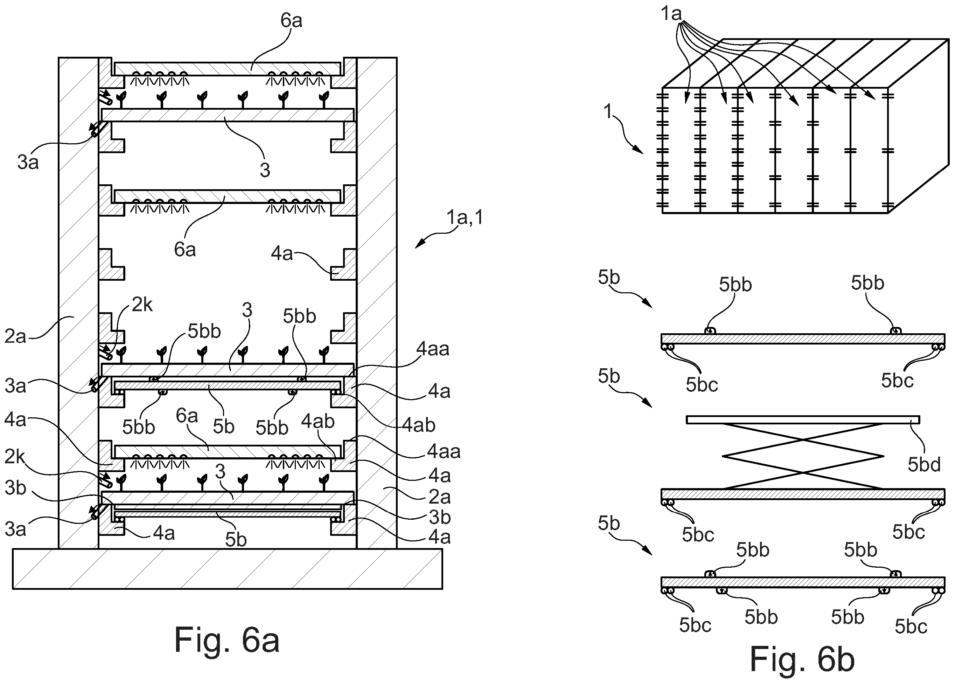

Fig. 6a shows an exemplary rack 1a and an exemplary arrangement of several racks 1a according to an embodiment. The rack 1a is a system 1 that is installed indoors. A rack 1a is shown on the left. The rack 1a may be part of a system 1 with a multitude of racks 1a (see figure 6a, right). Both the rack 1a and the system 1 are modular and scalable. The system 1 is adaptable to the use and the kind of crops being cultivated by the system 1. The racks 1a are connectable to each other. The light carriers/light shuttles providing the artificial light sources provide light with an adaptable intensity. Furthermore, growing conditions, such as temperature, humidity, fertigation, CO2 or aeration or other parameters may be varied.

In the lowest level of the rack 1a, which is shown on the left side of Fig. 6a, a modular racking element 3, which is designed as a hydrophobic tray/hydrophobic carrier, is arranged. The modular racking element 3 has a stepped corner profile 3b adapted to an L-profile 4a. The L-profiles 4a are designed to match the design of the shuttles 5b. There are shuttles 5b (see Figure 6b) which require one trail of the runway route 4aa, 4ab and there are shuttles 5b which require two trails of the runway route 4aa, 4ab. The L-legs of the L-profile 4a may have a correspondingly adapted length. For example, the vertically extending L-legs of the lowest L-profiles 4a are longer than the vertically extending L-legs of the second lowest L-profiles 4a. The vertically extending L-legs of the lowermost L-profiles 4a belong to L-profiles 4a, which each form shuttle trails. The vertically extending L-legs of the second lowest L-profiles 4a belong to L-profiles 4a, which form LED trails / light carrier trails. A corresponding shuttle 5b, which requires two trails and is thus intended for a modular racking element 3, is shown on the left side of figure 6b. The other two shuttles 5b in figure 6b each require only one trail. All shuttles 5b may have four means of locomotion 5bc.

A shuttle 5b is arranged in the centre of the rack 1a, which has four spacers 5bb. Two distance means 5bb are arranged on a first side of the shuttle 5b and two distance means 5bb are arranged on a second side of the shuttle 5b.

The shuttle 5b shown on the left in Fig. 6b is designed to transport a light carrier 6a and a modular racking element 3. The shuttle 5b has two spacers 5bb, which are arranged on a first side of the shuttle 5b. The shuttle 5b shown in the centre of figure 6b is intended for transporting a light carrier 6a. It has a kind of lifting platform 5bd, on which the light carrier 6a can be placed. The shuttle 5b shown on the right in Fig. 6b is intended for transporting a modular racking element 3 on a first side of the shuttle 5b and a light carrier 6a on a second side of the shuttle 5b. The shuttle 5b has four spacer means 5bb, two of the spacer means being arranged on a first side of the shuttle 5b and two of the spacer means being arranged on a second side of the shuttle 5b.

The racking modules 2a may be formed with connectors/inlets or outlets similar/same as the racking modules 2a of the embodiments of figures 3 or 4. Outlets 2k may also be provided for fertigation, for example as spray heads, which are arranged on the racking modules 2a. The drainage outlets 3a of the modular racking elements 3 may also open into the racking modules 2a or be connected to channels that run through a respective racking module 2a. An air supply is also provided in the present system 1.

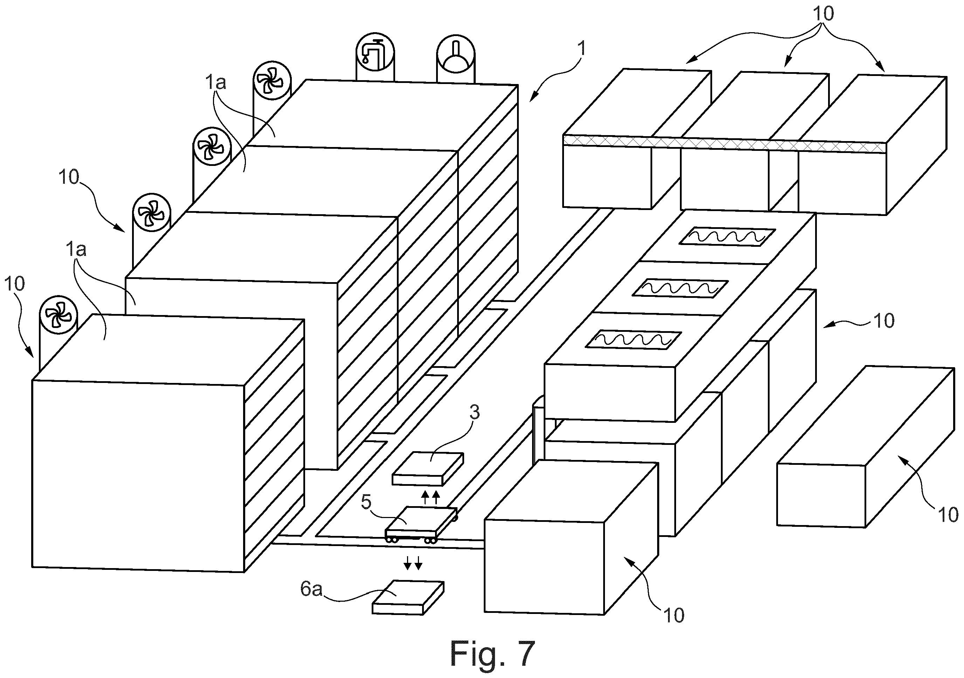

Fig. 7 shows another embodiment of a system 1. The system 1 is different in that racks 1a form the greenhouse itself. In some of the racks 1a, a single seed descend method (SSD) may be applied. In another rack 1a, vernalization may be provided. Each of the racks 1a may be provided with air and/or water and/or nutrients etc. Transport equipment, such as a rolling bench 1b, may be connected to the respective racks 1a. Transport shuttles 5 may also move between individual modules 10 of the system 1. On a first side, here the upper side of the shuttle, the transport shuttle 5 may transport a modular racking element 3. On a second side, here the underside of the shuttle, the transport shuttle 5 may transport a light carrier 6a. The individual modules 10 of system 1 may be buildings for an administration, a visitor reception, laboratories, work areas for a pre-growth phase or work areas for a post growth phase. The shuttle(s) 5b, 5 may be designed to move between the individual modules 10.

### Reference signs

- 1: growing/cultivation system
- 1a: rack of the growing/cultivation system
- 1b: rolling bench
- 2: modular basic skeleton/racking
- 2a: racking module
- 2aa: racking module shown in the right in Figure 1, left room of the greenhouse
- 2b: closable opening
- 2c: power connection
- 2d: top plate
- 2e: connecting piece
- 2f: (pouring) outlet for water/nutrition solution
- 2g: air inlet
- 2h: air outlet
- 2i: water inlet
- 2j: water outlet
- 2k: fertigation outlet
- 3: modular racking element
- 3a: (drain) outlet of the modular racking element
- 3b: corner profile of the modular racking element in adaption to the element of the modular runway
- 4: modular runway
- 4a: L-profile
- 4aa: runway route of the modular runway at a first height
- 4ab: runway route of the modular runway at a second height
- 5: modular transport shuttle
- 5a: sensor shuttle
- 5b: shuttle, which may be any type of shuttle
- 5bb: distance means
- 5bc: means of locomotion
- 5c: light shuttle
- 6: movable artificial light source
- 6a: light carrier
- 6b: light sensor carrier

- 10: modules of the system

- 100: greenhouse
- 101: room of the greenhouse
- 102: roof of the greenhouse
- 103: solar panel
- 104: LED
- 105: window

## Claims

1. A growing or cultivation system (1) for growing or cultivating organic or plant-based material, the system comprising:
at least one modular basic skeleton (2) for receiving at least one modular racking element (3);
at least one modular racking element (3), which is configured to carry the organic or plant-based material, wherein the at least one modular racking element (3) is connectable to the at least one modular basic skeleton (2);
at least one modular runway (4) provided at the at least one modular basic skeleton or provided at the at least one modular racking element; and
at least one, in particular powered, modular transport shuttle (5) for moving the at least one modular racking element along the at least one runway in accordance with a growth status of the organic or plant-based material and/or the crop planted.

2. The growing or cultivation system (1) according to claim 1, comprising:
at least one further modular shuttle to the modular transport shuttle (5), in particular at least one movable artificial light source (6),
wherein the further modular shuttle to the modular transport shuttle (5)is
- independently movable and/or configurable from the at least one the modular basic skeleton (2) and/or the at least one modular racking element (3),
- configured to arrange and/or to install at least one element from the at least one the modular basic skeleton (2), and/or the at least one modular racking element (3), and/or at least one another shuttle (5, 5a, 5b) or at least one carrier (6a),
in particular in accordance with a growth status of the organic or plant-based material and/or the crop planted.

3. The growing or cultivation system (1) according to claim 2,
wherein the at least one modular basic skeleton (2) is configured to receive the at least one modular racking element (3) and/or the at least one movable artificial light source (6) independently from each other, and
wherein the at least one modular transport shuttle (5) is configured to move the at least one modular racking element (3) independent from a light source, in particular independent from the at least one movable artificial light source (6), along the at least one modular runway (4).

4. The growing or cultivation system according to any one of the preceding claims, wherein the at least one modular racking element (3), shuttles (5, 5a), in particular the at least one transport shuttle (5), carriers (6a) and elements of the modular runway (4) are adapted to each other such that the at least one modular racking element (3), the shuttles (5, 5a), in particular the at least one transport shuttle (5), and the carriers (6a) are moveable at different vertical heights of the modular runway (4).

5. The growing or cultivation system according to any one of the preceding claims, wherein the at least one transport shuttle is configured to move the at least one modular racking element and/or a light source, in particular the at least one movable artificial light source, independently from each other along the at least one runway in accordance with a growth status of the organic or plant-based material and/or the crop planted.

6. The growing or cultivation system according to any one of the preceding claims, wherein the at least one, particularly powered, modular transport shuttle is configured to assemble or disassemble at least one of or multiple of:
- the at least one modular basic skeleton; and/or
- the at least one modular racking element; and/or
- the at least one modular runway; and/or
- the at least one powered modular transport shuttle; and/or
- the at least one movable artificial light source; and/or
- at least one of to the at least one modular racking element: a sensor, a water supply, a water outlet, to drain excess water, the movable artificial light source.

7. The growing or cultivation system according to any one of the preceding claims, wherein the at least one modular basic skeleton comprises a supporting body with at least one connecting element, to position-adjustably connect at least one of: a supporting body of another modular basic skeleton, and/or a modular racking element, and/or a modular runway and/or a movable artificial light source

8. The growing or cultivation system according to any one of the preceding claims, wherein the system comprises controlling means for controlling the at least one powered transport shuttle and/or the at least one movable artificial light source according to at least of:
- a predicted growth rate of the organic or the plant-based material and/or
- growth data provided based on at least one sensor for detecting a growth status of the organic or plant-based material and/or
- environmental data, including, for example, operating time of the artificial light source and/or daylight and/or ambient temperature and/or properties of the growth medium of the organic or plant-based material.

9. The growing or cultivation system according to any one of the preceding claims, wherein each of the at least one modular basic skeleton and the at least one modular racking element together provide the at least one runway for the powered transport shuttle; and/or wherein each of the at least one modular basic skeleton and the at least one movable artificial light source together provide the at least one runway for the powered transport shuttle; and/or the at least one modular basic skeleton alone provides the at least one runway for the transport shuttle; and/or
the modular basic skeleton is configured to receive a plurality of modular racking elements and/or a plurality of artificial light sources and/or a plurality of modular runways or other elements of the system, wherein in particular the modular basic skeleton forms a modular runway for the shuttles.

10. The growing or cultivation system according to any one of the preceding claims, wherein each of the at least one modular basic skeleton and the at least one modular racking element are provided as one piece and/or are permanently connected to each other; and/or wherein each of the at least one modular basic skeleton and the at least one movable artificial light source are provided as one piece and/or are permanently connected to each other

11. The growing or cultivation system according to any one of the preceding claims, wherein
the shuttle has a first surface which is configured to carry at least one element of the system, wherein the element is: a plant carrier, a light carrier, another shuttle, an element of the modular basic skeleton, an element of the modular runway and/or a modular racking element
and wherein, in particular, the shuttle has a second surface which is configured to carry at least one other element of the system, wherein the element is: a plant carrier, a light carrier, another shuttle, an element of the modular basic skeleton, an element of the modular runway and/or a modular racking element.

12. The growing or cultivation system according to any one of the preceding claims, wherein the modular basic skeleton comprises at least one of:
- at least one electrical connection for being connected to the at least one movable artificial light source and wherein the movable artificial light source is configured to be electrically connected to the at least one electrical connection; and/or
- at least one connection for providing water and/or nutrient and/or fertilizer for being connected to the at least one modular racking element and wherein the at least one modular racking element is configured to be fluidically connected to the at least one connection.

13. The growing or cultivation system according to any one of the preceding claims, wherein the at least one modular racking element has a first surface which is configured to carry the organic or plant-based material and a second surface, which faces away from the first surface,
and wherein the second surface is configured to allow the at least one modular racking element be carriable by a pallet handling system and/or
wherein the second surface comprises the at least one runway extending at least partially parallel to the first surface on a second surface.

14. The growing or cultivation system according to any one of the preceding claims, wherein at least one shuttle comprises:
- a moving mechanism for moving the at least one modular racking element and/or the at least one movable artificial light source; and/or
- a loading area for receiving at least one other shuttle, wherein the at least one other shuttle is movable independent from the at least one shuttle, wherein the at least one other is one of: a sensor shuttle comprising at least one sensor unit, an application shuttle for applying chemicals or biological onto the organic or plant-based material and/or other additives or eliminate unwanted conditions, such as pest, from the organic or plant-based material, an artificial light shuttle for applying artificial light to the organic or plant-based material; and/or
- a connection mechanism for being connected to at least one of: another shuttle and/or the at least one mobile transport shuttle being movable independent from the at least one powered modular transport shuttle; and/or
- at least one sensor for detecting a growth and/or health status of the organic or plant-based material; and/or
- at least one sensor for detecting signals indicating on environmental data; and/or
- a gravimetric sensor.

15. The growing or cultivation system according to any one of the preceding claims, wherein the modular basic skeleton and/or the at least one modular racking element are configured and arranged to provide a spacing between the at least one modular racking element and the modular basic skeleton, in particular between the at least one modular racking element and at least one wall of the modular basic skeleton, wherein the spacing is configured to allowing an at least temporary exchange of air.
